# EUROPÄISCHE PATENTSCHRIFT

(11) **EP 2 640 641 B1**
(45) Veröffentlichungstag und Bekanntmachung des Hinweises auf die Patenterteilung: **17.08.2016**
(21) Anmeldenummer: 11787836.3
(22) Anmeldetag: 17.11.2011
(51) Int. Cl.: B64F 1/22, B60D 1/07

(54) **SCHLEPPEN EINES FLUGZEUGS MIT FAHRWERKSADAPTER (VERFAHREN UND VORRICHTUNG)**
TOWING AN AIRCRAFT HAVING A LANDING GEAR ADAPTER (METHOD AND DEVICE)
PROCÉDÉ ET DISPOSITIF DE REMORQUAGE D'UN AVION MUNI D'UN ADAPTATEUR POUR TRAIN D'ATTERRISSAGE

(30) Priorität: 19.11.2010 DE 102010060683
(43) Veröffentlichungstag der Anmeldung: 25.09.2013
(73) Patentinhaber: Quickloading GmbH, 85640 Putzbrunn (DE)
(72) Erfinder: VAN DER LELIJ, Armin, 83734 Hausham (DE)
(74) Vertreter: Leonhard, Frank Reimund
(86) Internationale Anmeldenummer: PCT/EP2011/070370
(87) Internationale Veröffentlichungsnummer: WO 2012/066085

(56) Entgegenhaltungen:
- DE-A1- 3 642 044
- US-A- 2 854 251
- US-B1- 6 315 316

## Beschreibung

Die Erfindung betrifft allgemein die Ermöglichung von Bodenbewegungen von Flugzeugen, also Positionsänderungen, mit einer Schleppvorrichtung.

Bodenbewegungen von Flugzeugen, die nicht durch den Antrieb des Flugzeugs bewerkstelligt werden können, finden durch externe Schlepper statt, wenn etwa ein startbereites Flugzeug von der Abfertigungsposition auf den Rollweg zurückzuschieben ist oder eine Positionsänderung zwischen Abfertigungspositionen erforderlich ist oder wenn auch eine Beförderung des Flugzeugs von der Abfertigungsposition in eine Wartungsposition, etwa in der Werfthalle, notwendig ist. Zu diesem Zweck kommen Schlepper zum Einsatz, die zunächst mit dem Flugzeug, in der Regel mit dessen Bugfahrwerk, mechanisch gekoppelt werden und dann das angekoppelte Flugzeug zur gewünschten Position ziehen oder schieben. Häufig erfolgt der Schleppvorgang mittels einer mit eigenem Fahrwerk versehenen Schleppstange, die auf der einen Seite über einen Fahrwerksadapter mit dem Fahrwerk des Flugzeugs gekoppelt und auf der anderen Seite mit dem Schlepper verbunden ist. Vor oder nach dem Schleppvorgang wird die Schleppstange von dem Schlepper transportiert, beispielsweise zu einer neuen Einsatzposition, zu oder von einem Schleppstangendepot und dergleichen.

Die Schleppstangen oder zumindest der daran befestigte Bugfahrwerksadapter ist auf den speziellen zu schleppenden Flugzeugtyp abgestimmt, so dass bei zwei oder mehr Schleppvorgängen von verschiedenen Flugzeugtypen der passende Adapter zu installieren ist oder aber eine Schleppstange mit passendem Adapter aus dem Depot abzuholen ist. In zuerst genanntem Fall wird dazu ein Adapter an einer universellen Aufnahme der Schleppstange angebracht und nach dieser Umrüstung kann dann der Schleppvorgang mit dem passenden Adapter durchgeführt werden. Die Umrüstung ist in der Regel sehr zeitaufwendig, so dass vorzugsweise eine große Anzahl von Schleppstangen mit verschiedenen vorinstallierten Adaptern bereitgehalten wird, insbesondere da aufgrund der großen Bandbreite der Flugzeuggewichte auch entsprechend angepasste Stangendurchmesser benötigt werden. Aus diesem Grunde werden auch bevorzugt Schleppstangen verwendet, in denen ein permanent montierter Adapter für einen speziellen Flugzeugtyp vorgesehen ist, was aber einen Tausch der kompletten Schleppstange mit einer entsprechenden Anfahrt in das Depot erfordert.

Aus der US 2,854,251 (Able) ist zur Verbesserung der Situation eine Schleppeinrichtung offenbart (Tow Bars for Aircraft), welche zwei schwenkbare Stangen (dort 10, 11) besitzt, die über einen schwenkbaren Abstandshalter (dort 15) in verschiedene Winkellagen zueinander gebracht werden können, um verschiedene Breiten von Fahrwerken von Flugzeugen angepasst aufzunehmen. Um zusätzlich weitere Variationsmöglichkeiten zu haben, hat jede schwenkbare Stange vorne eine drehbare Hülse (dort 25), mit der durch Drehen der Hülse verschiedene Fahrwerksadapter so zur Mitte eingestellt werden können, dass unterschiedliche Fahrwerke von Flugzeugen ergriffen werden können. Die dort offenbarten unterschiedlichen Adapter sind mit den Bezugszeichen 30, 31 und 32 benannt, wobei ein zusätzlicher Fahrwerksadapter 35 axial in jeden der schwenkbaren Arme eingesteckt ist, um mit einem Haken (dort 37) auch solche Flugzeuge über ihre Fahrwerke am Boden bewegbar zu machen, welche Zugringe besitzen, vgl. dort Spalte 3, Zeile 7. Das erklärte Ziel der bekannten Schleppvorrichtung ist es, universeller zu sein und schneller und einfacher sich an verschiedene Typen von Flugzeugen anpassen zu können, wobei manche Flugzeugtypen weit beabstandete Ringe für die Aufnahme der Haken (receiving notch) besitzen, andere Flugzeugtypen Stifte oder Achsvorsprünge besitzen, die an gegenüberliegenden Seiten der Radgabel vorstehen, um die beiden Zugstangen dort mit den Adaptern anzubringen, vgl. dort Spalte 1, Zeilen 22 bis 31.

**Es ist Aufgabe der Erfindung** Schleppvorgänge für Bodenbewegungen von Flugzeugen verschiedenen Bautyps effizienter durchzuführen (schneller, einfacher und mit weniger Umständen, gleichwohl zuverlässig).

Gelöst wird die Aufgabe durch eine Kopplungsvorrichtung (Anspruch 1) zur Ankopplung an ein Fahrwerk, insbesondere Bugfahrwerk, eines Flugzeugs.

Die Kopplungsvorrichtung umfasst einen ersten Fahrwerksadapter, der zur Ankopplung an ein Fahrwerk eines Flugzeugs eines ersten Typs ausgebildet ist. Die Vorrichtung umfasst ferner einen zweiten Fahrwerksadapter, der zur Ankopplung an ein Fahrwerk eines Flugzeugs eines zweiten Typs, der unterschiedlich ist zum ersten Typ, ausgebildet ist. Ferner ist eine Wechselvorrichtung vorgesehen, die mit dem ersten und dem zweiten Fahrwerksadapter schwenk-gekoppelt und so ausgebildet ist, dass wahlweise der erste oder der zweite Fahrwerksadapter an einer zum Ankoppeln an das Fahrwerk geeigneten Betriebsposition mechanisch stabil positionierbar ist.

Gelöst wird die Aufgabe auch durch eine Kopplungsverfahren (Anspruch 13) zur Ankopplung an ein Fahrwerk, insbesondere Bugfahrwerk, eines Flugzeugs.

Die Kopplungsvorrichtung und das Verfahren ermöglicht die Ankopplung an zumindest drei unterschiedliche Flugzeugtypen, wobei die Wechselvorrichtung die mechanisch stabile Positionierung in der Betriebsposition sicherstellt und dass damit aufwändige Montagearbeiten erforderlich sind, wie dies beispielsweise in bekannten Schleppstangen der Fall ist, die eine einzelne Universalaufnahme aufweisen, so dass lose Burgfahrwerksadapter zwar zeitaufwendig montiert werden könnten, aber insbesondere die Montage vor Ort kaum praktikabel ist oder zumindest die Fixierung nur mit erheblichem Kraftaufwand möglich ist. Durch die Kopplungsvorrichtung kann somit die Umrüstung für Schleppvorgänge unterschiedlicher Flugzeugtypen rasch und ohne großen Kräfteaufwand vor Ort durchgeführt werden. Auch lässt sich durch die Vielseitigkeit der Kopplungsvorrichtung die Anzahl der bereit zu stellenden Schleppstangen deutlich reduzieren.

Mindestens ein weiterer Fahrwerksadapter ist zur Ankopplung an das Fahrwerk eines Flugzeugs eines weiteren Typs vorgesehen (Anspruch 1), der sich von dem ersten und dem zweiten Typ unterscheidet, wobei die Wechselvorrichtung mit dem mindestens einen weiteren Fahrwerksadapter schwenk-gekoppelt und so ausgebildet ist, dass wahlweise der erste, der zweite oder der mindestens eine weitere Bugfahrwerksadapter an der Betriebsposition mechanisch stabil positionierbar ist.

Die Anzahl der weiteren Adapter ist dabei lediglich durch die Größe der Vorrichtung begrenzt, so dass mit einer einzelnen Koppelvorrichtung viele verschieden Flugzeugtypen abgedeckt werden können, so dass insgesamt ein Großteil der Schlepperfahrten ins Schleppstangendepot vermieden werden können. Auch kann generell die Anzahl der verschiedenen Schleppstangen dadurch noch weiter verringert werden.

In vorteilhaften Ausführungsformen lässt sich die flexible Handhabung der Vorrichtung weiter verbessern, indem für jeden Fahrwerksadapter eine Adapteraufnahme zur Kopplung an die Wechselvorrichtung vorgesehen wird. Die Adapteraufnahme ist etwa so gestaltet, dass auch eine Umrüstung eines Teils oder der gesamten Kopplungsvorrichtung auf andere Flugzeugtypen möglich ist. So können entsprechend dem Flugbetrieb oder entsprechend der Nutzung der Kopplungsvorrichtung diejenigen Adapter montiert werden, die etwa eine maximale Reduzierung von Schlepperfahrten sicherstellt.

In einer weiteren Ausführungsform ist ferner eine Positioniereinrichtung zur mechanisch stabilen Positionierung der Bugfahrwerksadapter in der Betriebsposition vorgesehen. Die Positioniereinrichtung, die als Teil der Wechselvorrichtung vorgesehen ist, gewährleistet damit eine sichere Fixierung der Betriebsposition des Adapters bei den diversen Einsatzbedingungen.

In vorteilhaften Ausführungsformen ist dabei jede Adapteraufnahme so ausgebildet, dass die mechanisch stabile Positionierung durch mechanische Kopplung einer jeweiligen Adapteraufnahme mit der Positioniereinrichtung erfolgt (Anspruch 5). In diesem Falle kann die Adapteraufnahme zugleich für eine rasche und zuverlässige Montage der Adapter und für die exakte und zuverlässige Fixierung des Adapters in der Betriebsposition verwendet werden. Daraus ergibt sich ein kompakter und materialsparender Aufbau.

In einer Ausführungsform umfasst die Positioniereinrichtung ein Bolzenschwert (Anspruch 8), das mit einer jeweiligen Adapteraufnahme in der Betriebsposition im Eingriff und mit einem Bolzen verriegelt ist. Das Bolzenschwert, das in Form und Größe an die Adapteraufnahmen angepasst ist, ist mit der Adapteraufnahme im Eingriff und bestimmt damit bereits mit hoher Genauigkeit die Betriebsposition für den jeweiligen in der Schleppposition zu fixierenden Adapter. Die zuverlässige aber auch rasche Verriegelung kann mittels des Bolzens erfolgen (Anspruch 6).

In einer weiteren Ausführungsform ist ferner eine Arretiereinrichtung vorgesehen (Anspruch 7), die ausgebildet ist, jeden Fahrwerksadapter mechanisch fixiert in einer Magazinposition zu halten. Die Magazinposition ist dabei so zu verstehen, dass diese eine Lage und Position derjenigen Adapter kennzeichnet, die aktuell nicht in der Betriebsposition positioniert sind. Durch die Arretierung der nicht unmittelbar benötigten Adapter in einer Magazinposition, die zuverlässig arretiert ist, können mögliche Lageänderungen der Adapter in allen Betriebsphasen der Kopplungsvorrichtung vermieden werden. Dies gilt insbesondere für den Transport der Kopplungsvorrichtung oder auch für deren Montage an Schleppeinrichtungen. Auch bei der Umrüstung eines oder mehrerer Adapter bzw. Adapteraufnahmen kann damit die Lage eines nicht beteiligten Adapters während des Umrüstungsvorganges fixiert werden.

In einer vorteilhaften Ausführungsform ist ferner eine Schwenkeinrichtung vorgesehen (Anspruch 2), die so ausgebildet ist, dass jeder Fahrwerksadapter von der Magazinposition in die Betriebsposition schwenkbar ist. Die Bewegung des Adapters erfolgt in diesem Falle somit entlang einer genau bestimmten Bahn in Form einer Schwenkbewegung, so dass also für jeden Adapter eine präzise Überführung von der Magazinposition in die Betriebsposition erfolgt.

Die erfindungsgemäße Kopplungsvorrichtung ist in anschaulichen Ausführungsformen so ausgebildet, dass sie an einer Schleppstangenvorrichtung mechanisch reversibel montiert werden kann. Mechanisch reversibel ist dabei so zu verstehen, dass die Kopplungsvorrichtung als Montagesatz vorgesehen ist, der jederzeit ohne bauliche Änderungen an einer anderen Schleppstangenvorrichtung montiert werden kann. Auf diese Weise können bereits bekannte Schleppstangen in ihrer Funktion und Verwendungsflexibilität beträchtlich verbessert werden, indem eine Nachrüstung erfolgt. In anderen Fällen lässt sich eine Schleppstange rasch und effizient von einer Flugzeugpalette für eine andere Flugzeugpalette umrüsten.

Die erfindungsgemäße Kopplungsvorrichtung ist in einer weiteren anschaulichen Ausführungsform so ausgebildet sein, dass sie in eine Schleppstangenvorrichtung integriert wird oder ist.

In anderen Ausführungsformen ist Kopplungsvorrichtung an einem Schleppfahrzeug mechanisch reversibel montierbar ist (im Sinne einer technischen Ausbildung, "montierfähig" zu sein). Eine Schleppfahrzeug ist hierbei als ein Fahrzeug mit Antrieb zu verstehen, das generell zum Schleppen von Flugzeugen verwendet wird, wobei auch hier die Verwendung der erfindungsgemäßen Vorrichtung eine erhebliche Verbesserung bei der Nutzung der Schleppvorrichtung zur Folge hat.

Ausbildungen der Neigung der Adapteranbringung an der Schwenkstange erfassen Ansprüche 10, 11 und 12.

Gemäß einem weiteren Aspekt wird die zuvor genannte Aufgabe gelöst durch eine Schleppvorrichtung für Bodenbewegungen von Flugzeugen unterschiedlicher Typen, wobei die Schleppvorrichtung die Kopplungsvorrichtung (Anspruch 1) enthält. Die Schleppvorrichtung ist eine Schleppstangenvorrichtung oder in anderen Ausführungsformen ein Fahrzeug mit eigenem Antrieb.

Die Ausrichtung der Ebene der Schwenkung (die Schwenkebene) ist hier näher erläutert, um das Ankoppeln des Adapters (Fahrzeugadapter und Adapteraufnahme) an der Betriebsposition zu ermöglichen. Bei der Schwenkung wird der letzte Abschnitt des Vorschwenkens und beim Positionieren des Adapters in der Betriebsposition so verlaufen, dass die Ebenen im Wesentlichen parallel sind. Bedeutung hat dies allenfalls bei mehreren Adaptern auf einer Seite der Wechselvorrichtung. Ist nur links und rechts ein Adapter schwenkbar befestigt, der jeweils über einen eigenen Arm an die Betriebsposition schwenkbar ist. Dabei kann die Schwenkachse senkrecht zur Horizontalen stehen und die Schwenkebene parallel zur Horizontalen.

Sind mehrere Schwenklager (Lagereinrichtungen zum Schwenken) vorgesehen, sind sie relativ zueinander an unterschiedlicher Höhe und mit unterschiedlicher Neigung angebracht. Die Schwenkachsen sind dann nicht parallel, aber durch geneigte Anordnung der Adapter an den entsprechenden Armen kann diese Neigung kompensiert werden, wobei die Kompensation sich daran bemisst, dass der Adapter zum Zeitpunkt der Positionierung in der Betriebsposition, insbesondere an dem Bolzenschwert, parallel einschwenkt.

Die Anordnung (Anspruch 1) eignet sich bevorzugt für Bugfahrwerke der Flugzeuge.

Die Erfindung wird nun anhand von Ausführungsbeispielen unter Zuhilfenahme der schematischen Zeichnungen näher erläutert.
- Fig. 1: zeigt eine perspektivische Ansicht einer ersten Variante der erfindungsgemäßen Kopplungsvorrichtung
- Fig. 2: eine perspektivische Ansicht einer Schleppvorrichtung, an der die erfindungsgemäße Kopplungsvorrichtung permanent oder mechanisch reversibel oder lösbar montiert ist.

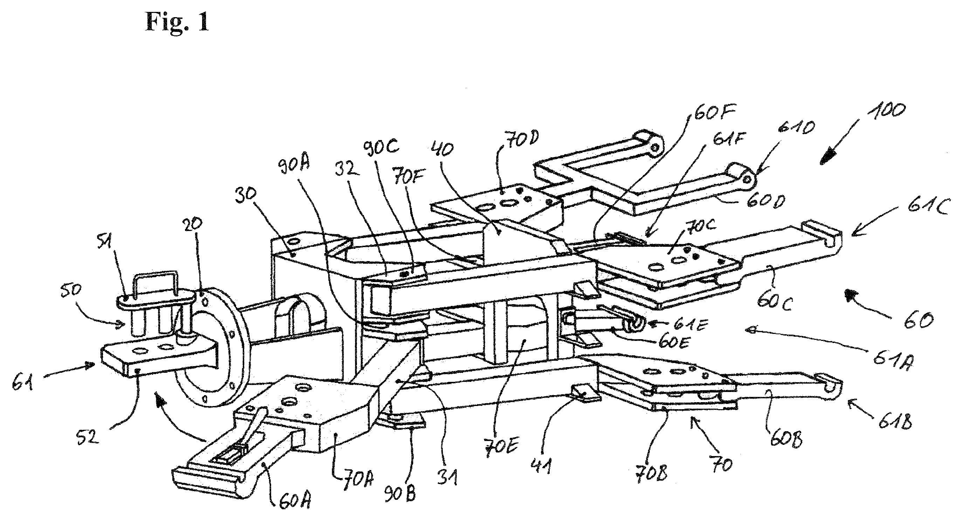

**Figur 1** zeigt eine perspektivische Ansicht einer Kopplungsvorrichtung 100, die mindestens zwei, vorzugsweise drei oder mehr Fahrwerksadapter 60 aufweist. In dem gezeigten Beispiel sind die Adapter 60A, 60B, 60C, 60D, 60E und 60F vorgesehen, wovon jeder so gestaltet ist, dass er mit dem Fahrwerk eines speziellen Flugzeugtyps mechanisch gekoppelt werden kann, um eine Bodenbewegung durch Schieben oder Ziehen zu ermöglichen.

Bevorzugt ist hier das Bugrad des Fahrwerks des Flugzeugs. Dies würde die Adapter zu Bugfahrwerksadapter machen, indes sind sie allgemein für jedes Fahrwerk des Flugzeugs geeignet.

Die Adapter 60 sind mechanisch mit einer Wechselvorrichtung 30 gekoppelt, die Schwenkeinrichtungen 90A, 90B, 90C (und weitere) an einem Schwenkträger 32 aufweist, an dem Schwenkarme 31, d.h., jeweils ein Schwenkarm für jeweils eine Aufnahme, drehbar gelagert sind.

Mit der Wechselvorrichtung 30 kann jeder einzelne Adapter 60 in eine Betriebsposition gebracht werden, die schematisch als Position 61 in der Zeichnung dargestellt ist und die strukturell ausgebildet und geeignet ist, eine Ankopplung an ein nicht dargestelltes Bugfahrwerk zu ermöglichen. In der Darstellung der Figur 1 befindet sich der Adapter 60A gerade in einer Zwischenposition entlang einer mechanisch durch die Wechselvorrichtung 30 festgelegten (schwenkenden) Bahn von einer Magazinposition des Adapters 60A, die schematisch als 61A bezeichnet ist, in die Betriebsposition 61.

Die weiteren Adapter 60B,..., 60F befinden sich in ihrer zugehörigen Magazinposition 61B, ..., 61F und können durch die Wechselvorrichtung 30 nach Bedarf an die Betriebsposition gebracht werden. Daher ist jedem Adapter eine mechanisch festgelegte Bahn zugeordnet, die ein Wechseln der Adapter, also eine Überführung von der zugehörigen Magazinposition in die Betriebsposition und umgekehrt, ohne großen Kraftaufwand ermöglicht.

Dadurch kann die Anpassung an unterschiedliche Flugzeugtypen rasch am oder in der Nähe des zu schleppenden Flugzeugs - ohne Aufsuchen eines Adapterdepots erfolgen.

In einer Ausführungsform, wie sie in Figur 1 gezeigt ist, ist eine Arretiereinrichtung 40 vorgesehen, die mittels Arretierkomponenten 41 die Adapter 60 einschließlich der Aufnahmen 70 und der zugehörigen Schwenkarme 31 zuverlässig in der jeweiligen Magazinposition halten.

In der gezeigten Ausführungsform sind ferner Adapteraufnahmen 70 vorgesehen, wovon die Aufnahmen 70A, ..., 70D in der Darstellung gezeigt sind. Die Aufnahmen 70 ermöglichen eine zuverlässige Fixierung der Adapter 60, z. B. mittels Bolzen oder anderer Befestigungsmittel, so dass auch eine Umrüstung der Vorrichtung durch Austausch zügig erfolgen kann. Die Aufnahmen 70 sind ferner so ausgebildet, dass sie mit einer Positioniervorrichtung 50 mechanisch koppelbar sind, so dass die Betriebsposition 61 mechanisch stabil von einem betreffenden Adapter während des Einsatzes beibehalten wird.

Dazu ist in einer Ausführungsform ein Bolzenschwert 52 in Verbindung mit einem Bolzen 51 vorgesehen, der wiederum in die jeweilige Aufnahme 70 eingreift und eine zuverlässige mechanische Verriegelung gibt.

Die Positioniervorrichtung 50 ist starr mit der Wechselvorrichtung 30 verbunden oder ist als Teil der Wechselvorrichtung ausgeführt und ist ihrerseits mittels eines Flansches 20 mit einer in Figur 1 nicht gezeigten Schleppvorrichtung, etwa einer Schleppstange zu verbinden. Der Flansch 20 und auch die Wechselvorrichtung 30 sind dabei so ausgebildet, dass sie z. B. mechanisch reversibel an eine bestimmte Art von Schleppvorrichtung stabil ankoppelbar ist oder aber auch an unterschiedlich gestaltete Schleppvorrichtungen, z. B. unterschiedliche Stangendurchmesser etc., angeflanscht werden kann. In anderen Fällen wird die Vorrichtung 100 so ausgeführt, dass sie permanent an einer Schleppvorrichtung montiert wird, ohne dass eine reversible Demontage möglich ist.

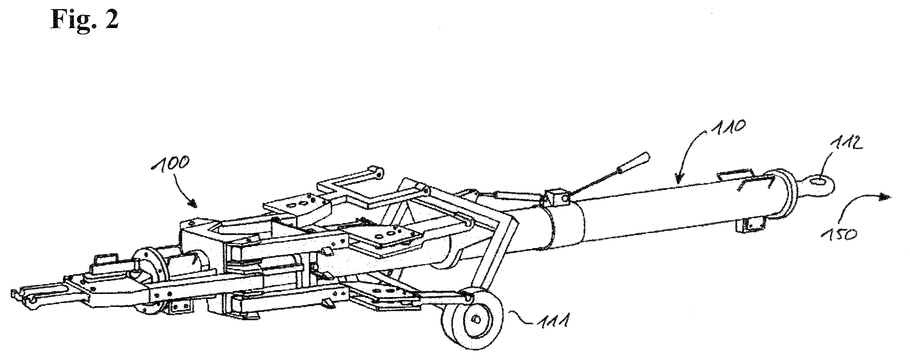

**Figur 2** zeigt eine perspektivische Ansicht einer Schleppvorrichtung etwa in Form einer Schleppstange 110 mit eigenem Fahrwerk 111 aber ohne Antrieb, wobei die Kopplungsvorrichtung 100 montiert ist. In anderen Ausführungsformen ist die Schleppvorrichtung 150 ein nicht dargestelltes Fahrzeug mit eigenem Antrieb, das mit Hilfe der Vorrichtung 100 oder 110 zum Schleppen von Flugzeugen unterschiedlichen Typs verwendet wird. Gekuppelt wird über die Kupplung 112.

Bei Verwendung der Schleppvorrichtung zum Ausführen von Bodenbewegungen von Flugzeugen wird diese mit dem Fahrwerk, insbesondere dem Bugfahrwerk über den geeignet ausgewählten Adapter 60, der sich in der Betriebsposition 61 befindet, gekoppelt, so dass die Schleppkräfte über den Adapter 60, den Flansch 20, die Positioniervorrichtung 30 und schließlich auf die Stange 110 übertragen werden. Die Schleppkräfte werden dann in der gezeigten Ausführungsform über eine Kupplung auf ein Schleppfahrzeug 150 mit Antrieb übertragen.

Durch die Wechselvorrichtung und/oder durch Schleppvorrichtung werden somit wesentlich weniger Schleppstangen benötigt. Die Schlepperfahrten zum Stangentausch können deutlich reduziert werden. Auch bereits bestehende Schleppstangen und Schlepper können mittels der beschriebenen Kopplungsvorrichtung nachgerüstet werden.

### Auszug zu den Bezugszeichen

- 100: Kopplungsvorrichtung
- 110: Schleppvorrichtung, z. B. Schleppstange
- 111: Fahrwerk der Schleppvorrichtung
- 112: Kupplung

- 20: Flansch zur Verbindung von Kopplungsvorrichtung und Schleppstange
- 30: Wechselvorrichtung
- 31: Schwenkarm
- 32: Schwenkträger

- 40: Arretiereinrichtung
- 41: Arretierkomponente
- 50: Positioniereinrichtung
- 51: Bolzen
- 52: Bolzenschwert

- 60: Bugfahrwerksadapter
- 60A,...,60F: Bugfahrwerksadapter
- 61: Betriebsposition
- 61A,...; 61F: Magazinpositionen

- 70: Adapteraufnahmen
- 70A,...70D: Adapteraufnahmen

## Patentansprüche

1. Kopplungsvorrichtung zur Ankopplung an Fahrwerke von Flugzeugen, wobei die
Kopplungsvorrichtung mit
einem ersten Fahrwerksadapter (60A), der zur Ankopplung an ein Fahrwerk eines Flugzeugs eines ersten Typs ausgebildet ist;
einem zweiten Fahrwerksadapter (60B, ..., 60F), der zur Ankopplung an ein Fahrwerk eines Flugzeugs eines zweiten Typs, der unterschiedlich ist zum ersten Typ, ausgebildet ist;
**dadurch gekennzeichnet, dass** die Kopplungsvorrichtung eine Wechselvorrichtung (30) aufweist, an welcher der erste und der
zweite Fahrwerksadapter (60A, 60B) verschwenkbar gekoppelt und die so ausgebildet ist, dass wahlweise der erste (60A) oder der zweite Fahrwerksadapter (60B, ..., 60F) an eine zum Ankoppeln an das Fahrwerk vorgesehene Betriebsposition (61) der Kopplungsvorrichtung verschwenkbar ist und dort mechanisch belastbar positionierfähig ist; und
mindestens ein weiterer zweiter Fahrwerksadapter (60C, ..., 60F) zur Ankopplung an ein Fahrwerk eines Flugzeugs eines weiteren Typs, der sich von dem ersten und dem zweiten Typ unterscheidet, vorgesehen ist, wobei an die Wechselvorrichtung (30) der mindestens eine weitere zweite Fahrwerksadapter verschwenkbar gekoppelt ist und die
Wechselvorrichtung (30) so ausgebildet ist, dass wahlweise der erste, der zweite oder der weitere zweite Fahrwerksadapter in die
Betriebsposition (61) verschwenkbar ist und mechanisch belastbar positionierfähig für eine Schub- oder Zuglast von zumindest 1.000 kg ist.

2. Kopplungsvorrichtung nach Anspruch 1, die zumindest zwei oder drei Lagereinrichtungen (90A, 90B, 90C) zum Schwenken umfasst, die so ausgebildet sind, dass jeder Fahrwerksadapter von seiner eigenen Magazinposition in die Betriebsposition (61) schwenkbar ist.

3. Kopplungsvorrichtung nach Anspruch 1, wobei für jeden der schwenkbaren Fahrwerksadapter eine Adapteraufnahme (70; 70A, ..., 70D) zur Kopplung an die Wechselvorrichtung (30) so vorgesehen ist, dass Lagereinrichtungen (90A, 90B, 90C) zum Schwenken an einem Schwenkträger (32) angeordnet sind, an dem jeweils ein Schwenkarm (31) für jeweils eine Adapteraufnahme (70) schwenkbar gelagert ist.

4. Kopplungsvorrichtung nach einem der Ansprüche 1 bis 3, wobei eine Positioniereinrichtung (50) zur mechanisch stabilen Positionierung jedes der Fahrwerksadapter in der Betriebsposition (61) vorgesehen ist.

5. Kopplungsvorrichtung nach Anspruch 3 und 4, wobei jede Adapteraufnahme (70) so ausgebildet ist, dass die mechanisch stabile Positionierung durch mechanische Kopplung einer jeweiligen Adapteraufnahme (70A, 70B, 70C) mit der Positioniereinrichtung (50) erfolgt.

6. Kopplungsvorrichtung nach Anspruch 5, wobei die Positioniereinrichtung (50) ein Bolzenschwert (52) umfasst, das mit einer jeweiligen Adapteraufnahme (70A, 70B, 70C) in der Betriebsposition (61) im Eingriff und mit einem Bolzen (51) verriegelt ist.

7. Kopplungsvorrichtung nach einem der vorhergehenden Ansprüche, die eine Arretiereinrichtung (40) umfasst, die ausgebildet ist, jeden der Fahrwerksadapter mechanisch fixiert in einer Magazinposition (61A, ..., 61F) zu halten.

8. Kopplungsvorrichtung nach Anspruch 1, die zumindest drei Lagereinrichtungen (90A, 90B, 90C) zum Schwenken umfasst, die so ausgebildet sind, dass jeder Fahrwerksadapter (60A, 60B, 60C) von seiner Magazinposition in die Betriebsposition (61), insbesondere an einem Bolzenschwert (52) schwenkbar ist.

9. Kopplungsvorrichtung nach einem der vorhergehenden Ansprüche, die ausgebildet ist, an einer Schleppstangenvorrichtung (110) mechanisch reversibel montiert zu werden, oder an einem Schleppfahrzeug (150) mechanisch reversibel montierbar ist (112).

10. Kopplungsvorrichtung nach Anspruch 1, wobei Lagereinrichtungen (90A, 90B, 90C) vorgesehen und ausgebildet sind, dass eine Schwenkebene einer Adapteraufnahme (70) jedes Adapters (60) den Bereich eines Bolzenschwerts (52) schneidet, insbesondere seinen rechten oder linken Rand.

11. Kopplungsvorrichtung nach Anspruch 1 oder 8, wobei zwei der Lagereinrichtungen (90A, 90B) auf zwei gegenüberliegenden Seiten der Wechselvorrichtung (30) mit einem Schwenkträger (32) angeordnet sind.

12. Kopplungsvorrichtung nach Anspruch 2 oder 11, wobei jeder Fahrwerksadapter (60) an seiner Adapteraufnahme (70; 70A,...,70D) geneigt angebracht ist.

13. Verfahren zur Ankopplung einer Schleppvorrichtung nach einem der vorigen Ansprüche an unterschiedliche Fahrwerke von Flugzeugen, mit den Schritten
- ein erster und zumindest ein zweiter Fahrwerksadapter (60A, 60B, ..., 60F) sind zur Ankopplung an einen ersten Fahrwerktyp eines ersten Flugzeugtyps bzw. zur Ankopplung an einen zweiten Fahrwerkstyp eines zweiten Flugzeugstyps ausgebildet, wobei die Fahrwerkstypen und die beiden Flugzeugstypen unterschiedlich, also technisch nicht gleich sind;
- wobei der zumindest eine zweite Fahrwerksadapter technisch anders ausgebildet ist als der erste Fahrwerksadapter;
- entweder wird der erste (60A) oder der zweite Fahrwerksadapter (60B, ..., 60F) durch ein Einschwenken an/in eine, zum Ankoppeln an das jeweilige Fahrwerk passende Betriebsposition (61) der Kopplungsvorrichtung mechanisch belastbar positioniert und an dieser Betriebsposition lösbar verriegelt (51).

14. Verfahren nach Anspruch 13, wobei eine Positioniereinrichtung (50) ein Bolzenschwert (52) umfasst, das mit einer jeweiligen Adapteraufnahme des jeweiligen Fahrwerksadapters (60A, 70A; 60B, 70B) in der Betriebsposition (61) im Eingriff steht und mit einem Bolzen (51) verriegelt wird.

15. Verfahren nach Anspruch 13, wobei entweder der zweite (60B, 70B) oder der erste Fahrwerksadapter (60A, 70A) über seine jeweilige Adapteraufnahme an der - zum Ankoppeln an das jeweilige Fahrwerk passenden - Betriebsposition (61) entriegelnd gelöst wird (51) und durch ein Wegschwenken in seine Magazinposition zurück bewegt wird.

## Claims

1. A coupling device for coupling to landing gears of airplanes, said coupling device comprising:
a first landing-gear adapter (60A) configured for coupling to a landing gear of an airplane of a first type;
at least one second landing-gear adapter (60B, ..., 60F) configured for coupling to a landing gear of an airplane of a second type which differs from the first type;
a changeover device (30) to which the first and the at least one second landing-gear adapters (60A, 60B) are rotatably coupled and which is configured such that optionally the first (60A) or the at least one second landing-gear adapter (60B, ..., 60F) can be pivoted to an operating position (61) of the coupling device intended for coupling to the landing gear and can be positioned there to be able to withstand mechanical loading; and wherein
at least one further second landing-gear adapter (60C, ..., 60F) is provided for coupling to a landing gear of an airplane of a further type which differs from the first and second types, wherein the at least one further second landing-gear adapter is rotatably coupled to the changeover device (30), and wherein the changeover device (30) is configured such that optionally the first, the second or the further second landing-gear adapter can be pivoted to the operation position (61) and can be positioned to be able to withstand a mechanical shear or tensile load of at least 1,000 kg.

2. The coupling device according to claim 1, comprising at least two or three bearing units (90A, 90B, 90C) adapted for pivoting which are configured such that each landing-gear adapter can be pivoted from its own magazine position into the operating position (61).

3. The coupling device according to claim 1, wherein an adapter receptacle (70; 70A, ..., 70D) adapted for coupling to the changeover device (30) is provided for each one of the rotatable landing-gear adapters in such a manner that bearing units (90A, 90B, 90C) adapted for pivoting are arranged on a pivot support (32) to which a respective pivot arm (31) for one adapter receptacle (70) each is rotatably mounted.

4. The coupling device according to any one of claims 1 to 3, wherein a positioning device (50) is provided for positioning each one of the landing-gear adapters in a mechanically stable manner in the operation position (61).

5. The coupling device according to any one of claims 3 and 4, wherein each adapter receptacle (70) is configured such that the mechanically stable positioning is achieved by mechanically coupling a respective adapter receptacle (70A, 70B, 70C) to the positioning device (50).

6. The coupling device according to claim 5, wherein the positioning device (50) comprises a bolt strut (52) which is engaged with a respective adapter receptacle (70A, 70B, 70C) in the operating position (61) and is locked by a bolt (51).

7. The coupling device according to any one of the preceding claims, comprising a locking device (40) which is configured to keep each one of the landing-gear adapters mechanically fixed in a magazine position (61A, ..., 61F).

8. The coupling device according to claim 1, comprising at least three bearing units (90A, 90B, 90C) adapted for pivoting which are configured such that each landing-gear adapter (60A, 60B, 60C) can be pivoted from its magazine position into the operation position (61), especially on a bolt strut (52).

9. The coupling device according to any one of the preceding claims, which is configured to be mounted to a tow bar device (110) in a mechanically reversible manner, or which can be mounted to a tow vehicle (150) in a mechanically reversible manner (112).

10. The coupling device according to claim 1, wherein bearing units (90A, 90B, 90C) are provided and configured such that a pivot plane of an adapter receptacle (70) of each adapter (60) crosses the area of a bolt strut (52), especially the right or left edge thereof.

11. The coupling device according to any one of the preceding claims 1 or 8, wherein two of the bearing units (90A, 90B) are arranged on two opposite sides of the changeover device (30) on a pivot support (32).

12. The coupling device according to any one of claims 2 or 11, wherein each landing-gear adapter (60) is attached to its adapter receptacle (70; 70A, ..., 70D) in an inclined manner.

13. A method for coupling a towing device according to any one of the preceding claims to different landing gears of airplanes, comprising the steps of:
- a first and at least one second landing-gear adapters (60A, 60B, ..., 60F) are configured for coupling to a first landing-gear type of a first airplane type and for coupling to a second landing-gear type of a second airplane type, respectively, wherein the landing-gear types and the two airplane types are different, i.e. technically not identical;
- wherein the at least one second landing-gear adapter is configured technically different from the first landing-gear adapter;
- either the first (60A) or the second landing-gear adapter (60B, ..., 60F) is positioned to be able to withstand mechanical loading by pivoting to/into an operating position (61) of the coupling device suitable for coupling to the respective landing-gear, and is releasably locked (51) in this operating position.

14. The method according to claim 13, wherein a positioning device (50) comprises a bolt strut (52) which is engaged with a respective adapter receptacle of the respective landing-gear adapter (60A, 70A; 60B, 70B) in the operating position (61) and is locked by a bolt (51).

15. The method according to claim 13, wherein either the second (60B, 70B) or the first landing-gear adapter (60A, 70A) is releasably unlocked (51) via its respective adapter receptacle in the operating position - suitable for coupling to the respective landing gear - and is moved back by pivoting it to its magazine position.

## Revendications

1. Dispositif d'accouplement destiné à l'accouplement à des trains d'atterrissage d'avions, dans lequel le dispositif d'accouplement est réalisé avec
un premier adaptateur (60A) de train d'atterrissage, qui est réalisé pour l'accouplement à un train d'atterrissage d'un avion d'un premier type ;
au moins un second adaptateur (60B, ..., 60F) de train d'atterrissage qui est réalisé pour l'accouplement à un train d'atterrissage d'un avion d'un second type qui se distingue du premier type ;
un moyen de changement (30) auquel le premier et ledit au moins un second adaptateur (60A, 60B) de train d'atterrissage sont accouplés avec faculté de pivotement et qui est réalisé de telle sorte que le premier (60A) ou ledit au moins un second adaptateur (60B, ..., 60F) de train d'atterrissage est susceptible de pivoter au choix vers une position de fonctionnement (61) du dispositif d'accouplement, prévue pour l'accouplement au train d'atterrissage, et est capable d'y être positionné en étant sollicité mécaniquement ; et il est prévu au moins un autre second adaptateur (60C, ..., 60F) de train d'atterrissage pour l'accouplement à un train d'atterrissage d'un avion d'un autre type qui se distingue du premier et du second type,
ledit au moins un autre second adaptateur de train d'atterrissage étant accouplé avec faculté de pivotement audit moyen de changement (30), et le moyen de changement (30) est réalisé de telle sorte qu'au choix le premier,
le second ou l'autre second adaptateur de train d'atterrissage est susceptible de pivoter jusque dans la position de fonctionnement (61) et est capable d'être positionné en étant sollicité mécaniquement pour une charge de poussée ou de traction d'au moins 1.000 kg.

2. Dispositif d'accouplement selon la revendication 1, qui inclut au moins deux ou trois moyens formant coussinet (90A, 90B, 90C) pour le pivotement, qui sont réalisés de telle sorte que chaque adaptateur de train d'atterrissage est susceptible de pivoter depuis sa propre position de magasin jusque dans la position de fonctionnement (61).

3. Dispositif d'accouplement selon la revendication 1, dans lequel est prévu, pour chacun des adaptateurs de train d'atterrissage susceptibles de pivoter, un logement d'adaptateur (70 ; 70A, ..., 70D) pour l'accouplement au moyen de changement (30), de telle sorte que pour le pivotement, des moyens formant coussinet (90A, 90B, 90C) sont agencés sur un support de pivotement (32) sur lequel est monté avec faculté de pivotement un bras de pivotement respectif (31) pour un logement d'adaptateur respectif (70).

4. Dispositif d'accouplement selon l'une des revendications 1 à 3, dans lequel est prévu un moyen de positionnement (50) pour le positionnement mécaniquement stable de chacun des adaptateurs de train d'atterrissage dans la position de fonctionnement (61).

5. Dispositif d'accouplement selon la revendication 3 et 4, dans lequel chaque logement d'adaptateur (70) est réalisé de telle sorte que le positionnement mécaniquement stable s'effectue par un accouplement mécanique du logement d'adaptateur respectif (70A, 70B, 70C) au moyen de positionnement (50).

6. Dispositif d'accouplement selon la revendication 5, dans lequel le moyen de positionnement (50) inclut une barre à boulon (52) qui est en engagement avec un logement d'adaptateur respectif (70A, 70B, 70C) dans la position de fonctionnement (61) et qui est verrouillée avec un boulon (51).

7. Dispositif d'accouplement selon l'une des revendications précédentes, comprenant un moyen d'arrêt (40) qui est réalisé pour retenir chacun des adaptateurs de train d'atterrissage de façon mécaniquement fixée dans une position de magasin (61A, ..., 61F).

8. Dispositif d'accouplement selon la revendication 1, qui inclut au moins trois moyens formant coussinet (90A, 90B, 90C) pour le pivotement, qui sont réalisés de telle sorte que chaque adaptateur (60A, 60B, 60C) de train d'atterrissage est susceptible de pivoter depuis sa position de magasin jusque dans la position de fonctionnement (61), en particulier sur une barre à boulon (52).

9. Dispositif d'accouplement selon l'une des revendications précédentes, qui est réalisé pour être monté de façon mécaniquement réversible sur un moyen à barre de remorquage (110) ou qui est susceptible d'être monté de façon mécaniquement réversible (112) sur un véhicule de remorquage (150).

10. Dispositif d'accouplement selon la revendication 1, dans lequel des moyens formant coussinet (90A, 90B, 90C) sont prévus et réalisés de telle sorte qu'un plan de pivotement d'un logement d'adaptateur (70) de chaque adaptateur (60) recoupe la zone d'une barre à boulon (52), en particulier son bord de droite ou de gauche.

11. Dispositif d'accouplement selon la revendication 1 ou 8, dans lequel deux des moyens formant coussinet (90A, 90B) sont agencés sur deux côtés opposés du moyen de changement (30) avec un support de pivotement (32).

12. Dispositif d'accouplement selon la revendication 2 ou 11, dans lequel chaque adaptateur (60) de train d'atterrissage est agencé avec inclinaison sur son logement d'adaptateur (70 ; 70A,...,70D).

13. Procédé pour l'accouplement d'un dispositif de remorquage selon l'une des revendications précédentes à différents trains d'atterrissage d'avions, comprenant les étapes consistant à :
- réaliser un premier et au moins un second adaptateur (60A, 60B, ..., 60F) de train d'atterrissage pour l'accouplement à un premier type de train d'atterrissage d'un premier type d'avion ou pour l'accouplement à un second type de train d'atterrissage d'un second type d'avion,
dans lequel les types de train d'atterrissage et les deux types d'avion sont différents, donc ils ne sont pas identiques sur le plan technique ;
- ledit au moins un second adaptateur de train d'atterrissage étant d'une réalisation technique différente de celle du premier adaptateur de train d'atterrissage ;
- et soit le premier (60A) soit le second adaptateur (60B, ..., 60F) de train d'atterrissage est positionné avec faculté d'être sollicité mécaniquement par un pivotement vers/jusque dans une position de fonctionnement (61) du dispositif d'accouplement, laquelle est convenable pour l'accouplement au train d'atterrissage respectif, et il est verrouillé de façon détachable sur cette position de fonctionnement (51).

14. Procédé selon la revendication 13, dans lequel un moyen de positionnement (50) inclut une barre à boulon (52) qui est en engagement avec un logement d'adaptateur respectif de l'adaptateur respectif (60A, 70A ; 60B, 70B) de train d'atterrissage dans la position de fonctionnement (61) et qui est verrouillée avec un boulon (51).

15. Procédé selon la revendication 13, dans lequel soit le second (60B, 70B) soit le premier adaptateur (60A, 70A) de train d'atterrissage est desserré avec déverrouillage (51) via son logement d'adaptateur respectif sur la position de fonctionnement (61) convenable pour l'accouplement au train d'atterrissage respectif, et est retourné dans sa position de magasin par un pivotement en éloignement.
